# EUROPEAN PATENT APPLICATION

(11) **EP 2 184 531 A1**
(43) Date of publication of application: **12.05.2010**
(21) Application number: 08019563.9
(22) Date of filing: 08.11.2008
(51) Int. Cl.: F21V 7/00, F21S 8/10, B62J 6/00, B62J 6/02, B62J 6/04, B60Q 1/26, F21W 101/023, F21Y 101/02

(54) **Warning lamp**

(71) Applicant: Liu, Hung-Chang, Lujhou City T'ai pei Hsien (TW)
(72) Inventor: Liu, Hung-Chang, Lujhou City T'ai pei Hsien (TW)
(74) Representative: Hauck Patent- und Rechtsanwälte

(57) **Abstract**

A warning lamp comprises a base (10), a lamp (20) and a lens (30). The base (30) has a mounting surface, a lamp mount (101), an annular surface and a base reflector (11). The lamp mount (101) is formed centrally in the mounting surface. The base reflector (11) is mounted on the mounting surface. The lamp (20) is mounted in the lamp mount (101). The lens (30) is mounted on the base (10) and has a refractor (31) and a lens cover (32). The refractor (31) is mounted on the mounting surface and has multiple indentations. The lens cover (32) is mounted on the base (10) and around the refractor (31). When the warning lamp is operated, the light is easily bent toward the annular surface of the lens cover (32). Therefore, car drivers can easily judge a width of the bicycle for improved rider safety.

## Description

### 1. Field of the Invention

The present invention relates to a warning lamp, especially to a warning lamp for bicycle handlebars.

### 2. Description of the Prior Arts

Passive and active lighting systems are frequently mounted on bicycles to reflect and radiate light to illuminate the bicycle and rider. Passive systems include reflectors mounted on wheels, seat posts, clothing and the like and active systems comprise at least one lamp. Normally light emitting diodes (LED) or halogen lamps are used. However, most lighting systems are mounted centrally on the bicycle or on the rider, therefore, drivers may not be able to reliably judge a width of the bicycle causing the driver to collide with the handlebars, destabilizing the rider and maybe causing accidents.

Furthermore, LEDs have high directional properties, so emit a narrow beam, causing blind spots where emitted light is not clearly visible. Therefore, warning and lighting effects of active lighting for bicycles is limited.

To overcome the shortcomings, the present invention provides a warning lamp to mitigate or obviate the aforementioned problems.

The main objective of the present invention is to provide a warning lamp for bicycle handlebars for improved safety.

A warning lamp in accordance with the present invention has a base, a lamp and a lens. The base has a mounting surface, a lamp mount, an annular surface and a base reflector. The lamp mount is formed centrally in the mounting surface. The base reflector is mounted on the mounting surface and has a through hole and a reflective surface. The lamp is mounted in the lamp mount and through the base reflector. The lens is mounted on the base and around the light and has a refractor and a lens cover. The refractor is mounted on the mounting surface and around the lamp and has a lamp hole and multiple indentations. The lens cover is mounted on the base and around the refractor and has a lens reflector. When the warning lamp is operated, the light is easily bent toward the annular surface of the lens cover. Therefore, car drivers can easily judge a width of the bicycle for improved rider safety.

Other objectives, advantages and novel features of the invention will become more apparent from the following detailed description when taken in conjunction with the accompanying drawings.

### IN THE DRAWINGS:

Fig. 1 is a perspective view of a warning lamp in accordance with the present invention;
Fig. 2 is a rear exploded perspective view of the warning lamp in Fig. 1;
Fig. 3 is a front exploded perspective view of the warning lamp in Fig.1;
Fig. 4 is a side view in partial section of the warning lamp in Fig.1;
Fig. 5 is a top view in partial section of the warning lamp, shown mounted on bicycle handlebars; and
Fig. 6 is a side view of the warning lamp showing that the warning lamp mounted on a seat lug and stem.

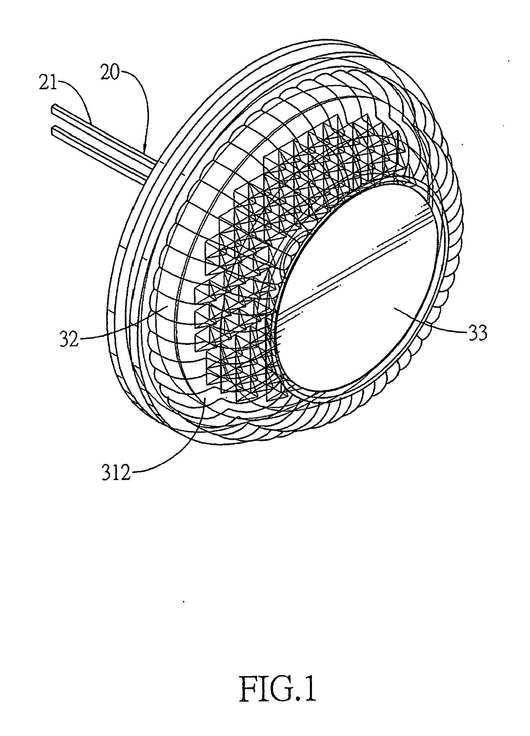

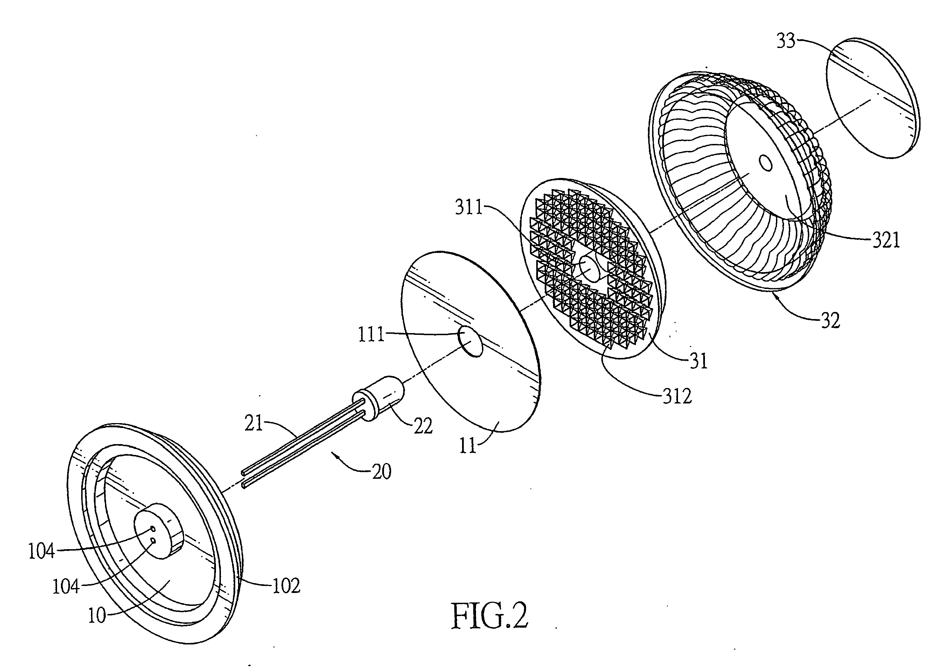

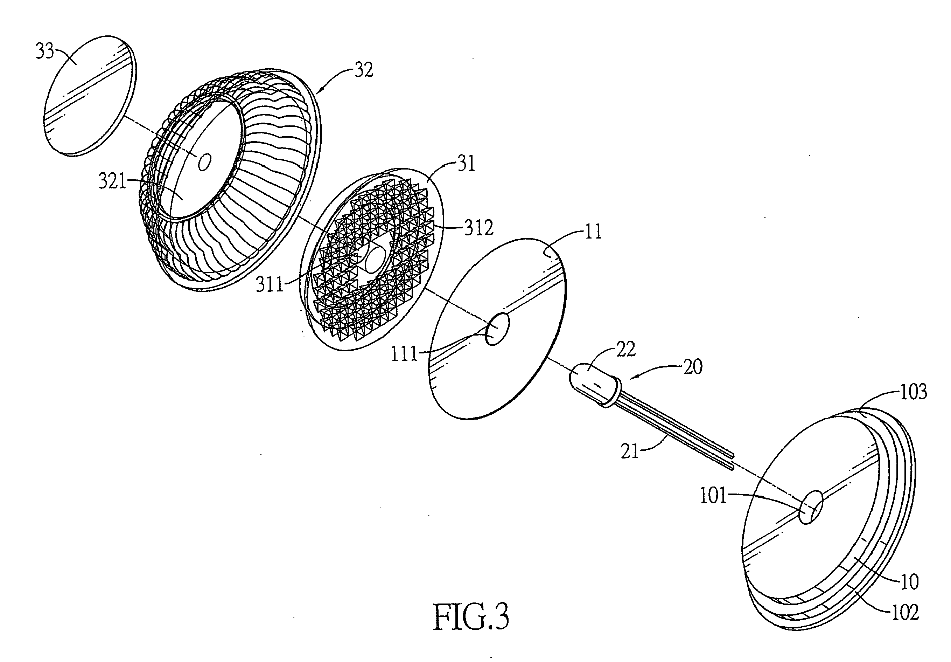

With reference to Figs. 1 to 3, a warning lamp in accordance with a present invention comprises a base (10), a lamp (20) and a lens (30).

The base (10) is a disk and has an attaching surface, a mounting surface, a lamp mount (101), an annular surface, and may have a rim (102), an annular shoulder (103) and a base reflector (11). The attaching surface may be recessed to allow electronic components to be mounted therein, such as but not limited to a printed circuit board, switch and power supply, such as a battery or the like. The lamp mount (101) is formed centrally in the mounting surface, may protrude from the attaching surface and comprises two leg holes (104) formed through the attaching surface of the base (10).

The rim (102) protrudes circumferentially from the annular surface of the base (10). The annular shoulder (103) is formed around the annular surface adjacent to the rim (102) of the base (10).

The base reflector (11) is mounted on the mounting surface of the base (10) and has a through hole (111) and a reflective surface facing away from the mounting surface of the base (10). The through hole (111) is formed centrally through the base reflector (11).

The lamp (20) is mounted in the lamp mount (101) and connected to a power source to emit light. The lamp (20) may be a light emitting diode (LED), halogen or the like and has a lighting element (22) and two legs (21). The light may be white or colored light such as but not limited to red, blue and orange. The lighting element (22) may be mounted through the through hole (111) of the base reflector (11), is mounted in the lamp mount (101) and protrudes therefrom. The legs (21) are mounted through the through hole (111) of the base (10) and are respectively through the leg holes (104) of the lamp mount (101).

The lens (30) is mounted on the base (10) and around the light (20) and comprises a refractor (31) and a lens cover (32).

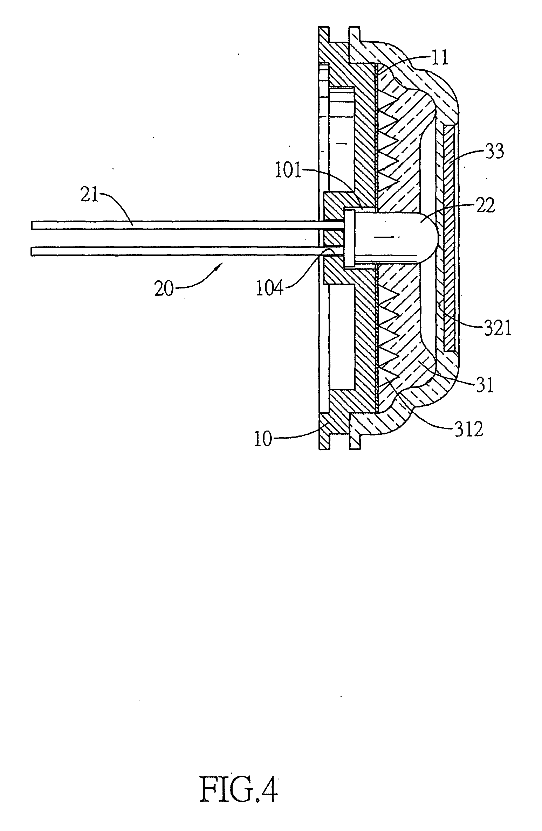

With further reference to Fig. 4, the refractor (31) is mounted on the mounting surface of the base (10) and around the lamp (20), bends the light to be substantially parallel with the mounting surface of the base (10) and may comprise an inner surface, an outer surface, a lamp hole (311) and multiple indentations (312). The inner surface of the refractor (31) is mounted on the mounting surface of the base (10). The outer surface of the refractor (32) may be recessed. The lamp hole (311) is centrally formed through the refractor (31). The multiple indentations (312) are formed in the inner surface of the refractor (31) and each indentation (312) has multiple refracting faces. The refracting faces may be triangular and the refracting faces may be implemented to form multiple square-pyramids or multiple triangular pyramids.

The lens cover (32) is pellucid, is mounted on the base (10) and around the refractor (31), may have a reflecting surface (321), a lens reflector (33), an annular surface, an annular flange and a diffraction pattern and may be colored, such as but not limited to red, blue or orange. The diffraction pattern may have radial ribs to further refract and diffuse the light from the lamp (20). The reflecting surface (321) is parallel with the mounting surface of the base (10) and may be recessed. The reflector (33) is attached to, may be formed on or mounted on the reflecting surface (321), may be flush with the lens cover (32) and has an inner surface being reflective. The lens reflector (33) may be aluminum foil, reflective paint, a metal disk or the like. The annular flange is formed around the annular surface, corresponds to and is mounted on the rim (102) of the base (10) and may abut the annular shoulder (103) of the base (10). The diffraction pattern may be formed on the annular surface of the lens cover (32).

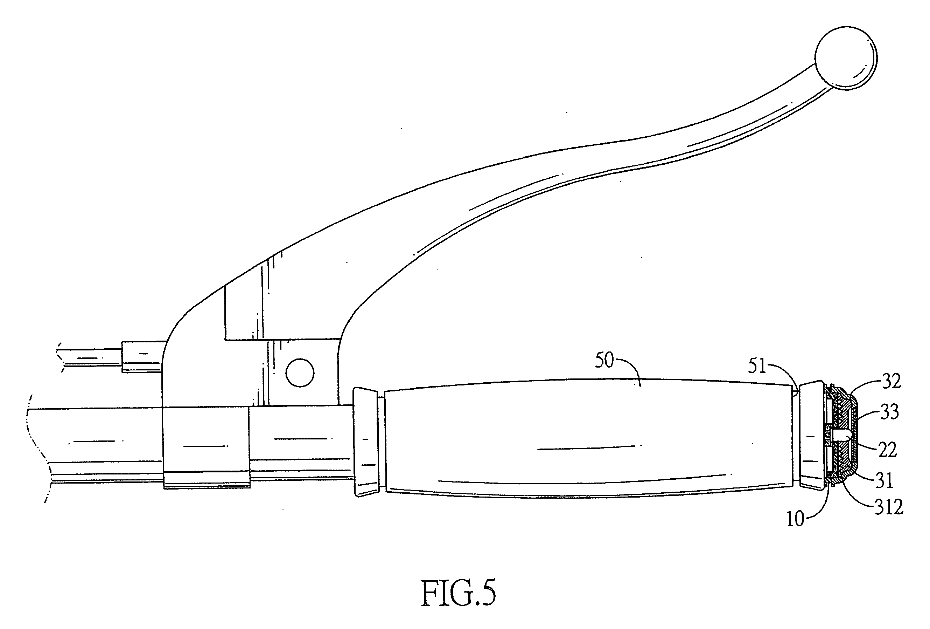

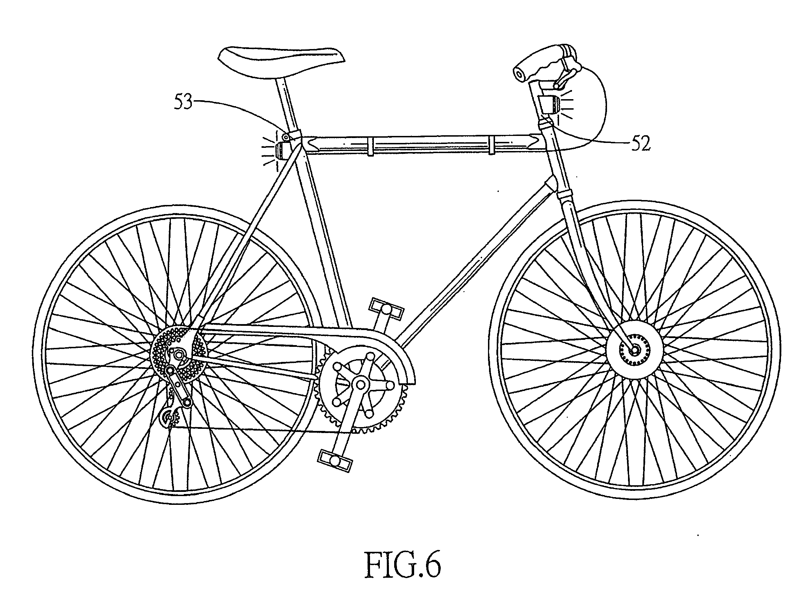

With further reference to Fig. 5, at least one warning lamp is mounted in a distal end (51) on a handlebar (50) of a bicycle and connects with a power source. With further reference to Fig. 6, the warning lamp may be mounted on a stem (52) of the bicycle and faces forward or mounted on a seat lug (53) of the bicycle and faces rearward.

When the warning lamp is operated, light radiating from the lamp (20) can be reflected between the lens reflector (33) and the base reflector (11). Due to the indentations (312) of the refractor (31) having multiple refracting faces, the light is easily bent toward the annular surface of the lens cover (32). Therefore, car drivers can easily judge a width of the bicycle for improved rider safety.

Even though numerous characteristics and advantages of the present invention have been set forth in the foregoing description, together with details of the structure and features of the invention, the disclosure is illustrative only. Changes may be made in the details, especially in matters of shape, size, and arrangement of parts within the principles of the invention to the full extent indicated by the broad general meaning of the terms in which the appended claims are expressed.

## Claims

1. A warning lamp comprising:
a base (10) having
an attaching surface;
a mounting surface;
a lamp mount (101) being formed centrally in the mounting surface and having two leg holes (104) being formed through the attaching surface of the base (10);
an annular surface; and
a base reflector (11) being mounted on the mounting surface of the base (10) and having a through hole (111) being formed centrally through the base reflector (11); and
a lamp (20) having
a lighting element (22) being mounted in the lamp mount (101) and protruding from the lamp mount (101); and
two legs (21) being mounted through the through hole (111) of the base reflector (11) and respectively through the leg holes (104) of the base (10) ; and
a lens (30) being mounted on the base (10) and around the light and having a lens cover (32) being pellucid; wherein the warning lamp is **characterized in that** the base reflector (11) having a reflective surface facing away from the mounting surface of the base (10); and the lens cover (32) having a reflecting surface being parallel with the mounting surface of the base (10).

2. The warming lamp as claimed in claim 1, wherein
the base (10) further has a rim (102) formed around protruding circumferentially from the annular surface of the base (10); and
the lens cover (32) further has
a lens reflector (33) being mounted on the reflecting surface (321) and having an inner surface being reflective;
an annular surface; and
an annular flange being formed around the annular surface of the lens cover (32) and mounted on the rim (102) of the base (10).

3. The warming lamp as claimed in claim 1 or 2, wherein the lens cover (32) further has a diffraction pattern being formed on the annular surface of the lens cover (32).

4. The warning lamp as claimed in claim 3, wherein the diffraction pattern has multiple radial ribs.

5. A warning lamp comprising:
a base (10) having
an attaching surface;
a mounting surface;
a lamp mount (101) being formed centrally in the mounting surface and having two leg holes (104) being formed through the attaching surface of the base (10);
an annular surface; and
a base reflector (11) being mounted on the mounting surface of the base (10) and having a through hole (111) being formed centrally through the base reflector (11); and
a lamp (20) having
a lighting element (22) being mounted in the lamp mount (101) and protruding from the lamp mount (101); and
two legs (21) being mounted through the through hole (111) of the reflector (11) and mounted respectively through the leg holes (104); and
a lens (30) being mounted on the base (10) and around the light and having a lens cover (32) being pellucid; wherein the warning lamp is **characterized in that**
the base reflector (11) having a reflective surface facing away from the mounting surface of the base (10);
the lens cover (32) having a reflecting surface being parallel with the mounting surface of the base (10); and the lens (30) further having
a refractor (31) being mounted on the mounting surface of the base (10) and around the lamp (20) and having
an inner surface being mounted on the mounting surface of the base (10);
an outer surface;
a lamp hole (311) being centrally formed through the refractor (31); and
multiple indentations (312) being formed in inner surface of the refractor (31) and each indentation (312) having multiple refracting faces.

6. The warming lamp as claimed in claim 5, wherein
the base (10) further has a rim (102) formed around protruding circumferentially from the annular surface of the base (10); and
the lens cover (32) further has
a lens reflector (33) being mounted on the reflecting surface (321) and having an inner surface being reflective;
an annular surface; and
an annular flange being formed around the annular surface of the lens cover (32) and mounted on the rim (102) of the base (10).

7. The warming lamp as claimed in claim 5 or 6, wherein the lens cover (32) further has a diffraction pattern being formed on the annular surface of the lens cover (32).

8. The warning lamp as claimed in claim 7, wherein the diffraction pattern has multiple radial ribs.
